(19) Europäisches Patentamt / European Patent Office / Office européen des brevets

(11) **EP 2 617 741 B1**

(12) **EUROPEAN PATENT SPECIFICATION**

(45) Date of publication and mention
of the grant of the patent:
**13.01.2016 Bulletin 2016/02**

(51) Int Cl.:
***C08F 10/00*** *(2006.01)*    ***C08F 2/00*** *(2006.01)*

(21) Application number: **12151536.5**

(22) Date of filing: **18.01.2012**

(54) **PROCESS FOR POLYMERIZING OLEFIN POLYMERS IN THE PRESENCE OF A CATALYST SYSTEM AND A METHOD OF CONTROLLING THE PROCESS**

VERFAHREN ZUR POLYMERISIERUNG VON OLEFINPOLYMEREN IN GEGENWART EINES KATALYSATORS UND VERFAHREN ZUR STEUERUNG DES VERFAHRENS

PROCÉDÉ DE POLYMÉRISATION DE POLYMÈRES D'OLÉFINE EN PRÉSENCE D'UN SYSTÈME DE CATALYSEUR ET PROCÉDÉ DE CONTRÔLE DU PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.07.2013 Bulletin 2013/30**

(73) Proprietor: **Borealis AG**
**1220 Vienna (AT)**

(72) Inventors:
• **Tuominen, Olli**
**00930 Helsinki (FI)**
• **Ek, Carl-Gustav**
**426 58 Västra Frölunda (SE)**
• **Alastalo, Kauno**
**06400 Porvoo (FI)**
• **Leskinen, Pauli**
**00700 Helsinki (FI)**
• **Lylyharju, Harri**
**06830 Kulloonkylä (FI)**
• **Eriksson, Erik**
**44491 Stenungsund (SE)**
• **Eriksson, Virginie**
**44491 Stenungsund (SE)**
• **Kokko, Esa**
**01520 Vantaa (FI)**
• **Bäckman, Mats**
**41651 Göteborg (SE)**
• **Johansson, Solveig**
**444 47 Stenungsund (SE)**

(74) Representative: **Kador & Partner**
**Corneliusstraße 15**
**80469 München (DE)**

(56) References cited:
**EP-A- 0 313 087**    **EP-A1- 0 315 192**
**WO-A2-2007/136493**    **US-A- 4 560 671**

## Description

### Field of the Invention

The present invention is directed to a process of polymerizing olefins in the presence of a catalyst, such as a Ziegler-Natta catalyst, and an activating cocatalyst. Especially the present invention is directed to homo- or copolymerization of ethylene, propylene and their mixtures, optionally together with alpha-olefins having from 4 to 10 carbon atoms.

In particular, the present invention is directed to a method of feeding cocatalyst and catalyst into a continuously operating polymerization process.

### Prior Art

It has been known to maintain the average level of the ratio of the activator to the solid component (for instance, aluminium to titanium) at a constant level over a long period of time. Such time period may be, for instance, the duration of the production campaign, or the average residence time of the polymer within the reactor.

In commercial processes the activator is typically fed into the reactor so that a fixed amount of the activator is added per one ton of the diluent. Consequently, the activator feed rate into the reactor remains constant as long as the diluent feed rate is constant. On the other hand, if the diluent feed rate is changed, for instance, to compensate a change in the solids content, then also the feed rate of the activator changes.

EP-A-315192 discloses a process where the solid catalyst component and the activator are introduced at a specified ratio into the reactor. The document does not disclose the calculation and control of the activator concentration.

Also EP-A-313087, WO-A-2007/136493 and US-A-4560671 disclose that the catalyst and activator had been fed at a given ratio but none of the documents discloses the control of the activator concentration.

### Problem

During the polymerization process the polymer production rate in the reactor sometimes changes. This may be compensated by manipulating the catalyst feed rate. On the other hand, it is customary in the art to feed the activator as a certain fraction of the overall diluent feed rate. Thereby the activator feed rate typically remains as constant over large period of time. When the catalyst feed rate is changed and the activator feed rate remains constant this causes the activator to catalyst ratio to change. The present inventors have found that this has an effect on the activity of the catalyst, which can amplify the variations in the production rate.

Additionally, the aluminium alkyl compounds often have a scavenging effect. They react with certain impurities in the reaction mixture, such as oxygen-containing compounds like oxygen, water and the like. If the concentration of the activator within the reactor becomes too low, then such impurities may react with the catalyst thus reducing the productivity of the catalyst and disturbing the process.

The problem has been solved by adjusting the activator feed rate when the catalyst feed rate has been changed so that an approximately constant Al/Ti ratio is obtained. At the same time the concentration of the activator should be maintained within a preset range. Especially, the concentration of the activator within the reactor should not be lower than a predefined lower limit.

The inventors have found that when the Al/Ti ratio is controlled and the activator concentration is maintained within a predefined range then the production rate variations within the reactor are reduced. It is assumed that the accurate control of the Al/Ti ratio leads to a consistent activation of the catalyst and thereby the properties of the active catalyst are not changed during the course of polymerization. This results in a stable process and improved control of polymer properties.

### Summary of the Invention

According to the present invention the feed rate of the activator is adjusted based on the changes made in the catalyst feed. When the catalyst feed rate is increased, then also the activator feed rate is increased. Correspondingly, when the solid catalyst component feed rate is reduced, then also the set point of the activator feed rate is reduced. However, at the same time the concentration of the activator within the reactor is preferably calculated. If the calculated concentration is higher than a predefined lower limit then the activator feed is reduced. On the other hand, if the concentration is at the lower limit, then the activator feed is maintained at its present value.

The concentrations of the activator and the catalyst within the reactor can be calculated according to the standard engineering practise by defining material balances over the reactor and solving the concentrations from there. The calculations can be conducted by process computers.

The present invention thus provides a process for continuously polymerizing at least one olefin in a polymerization reactor in the presence of a catalyst comprising a solid catalyst component further comprising a transition metal, and an activator, said process comprising the steps of:

(i) continuously feeding said solid catalyst component into the polymerization reactor to establish a solid catalyst component feed;
(ii) continuously feeding said activator into the polymerization reactor to establish an activator feed;
(iii) establishing a signal proportional to the flow rate of said solid catalyst component into the polymerization reactor and determining the flow rate of said solid catalyst component from said signal;
(iv) establishing a signal proportional to the flow rate of said activator into the polymerization reactor and determining the flow rate of said activator from said signal;
(v) defining a predetermined value for a ratio of the activator feed rate to the solid catalyst component feed rate;
(vi) calculating the concentration of the activator within fluid phase in said reactor;
(vii) defining a minimum value for said concentration of said activator;
(viii) increasing said predetermined value for the ratio of the activator feed rate to the solid catalyst component feed rate if the concentration of the activator is lower than said minimum value for said concentration;

wherein the feed rate of said activator is adjusted in response to changes in said solid catalyst component feed rate so that the ratio of said activator feed rate to said solid catalyst component feed rate is at said predetermined value for said ratio.

As seen from another aspect, the present invention also provides a method of controlling a continuous polymerization process where at least one olefin is polymerized in a polymerization reactor in the presence of a catalyst comprising a solid catalyst component further comprising a transition metal, and an activator, said process comprising the steps of:

(i) establishing a set point for the feed rate of said solid catalyst component into the polymerization reactor;
(ii) defining a set point for a ratio of the activator feed rate to the solid catalyst component feed rate;
(iii) controlling the feed rate of said solid catalyst component into the polymerization reactor to follow said set point for the feed rate of said solid catalyst component;
(iv) calculating a set point for the feed rate of said activator from said set point for the feed rate of said solid catalyst component and said set point for the ratio of the activator feed rate to the solid catalyst component feed rate;
(v) controlling the feed rate of said activator into the polymerization reactor to follow said set point for the feed rate of said activator;
(vi) calculating the concentration of the activator within fluid phase in said reactor;
(vii) defining a minimum value for said concentration of said activator;
(viii) increasing said set point for the ratio of the activator feed rate to the solid catalyst component feed rate if the concentration of the activator is lower than said minimum value for said concentration.

### Detailed Description

Polymerization catalyst

In the subsequent text the terms "activator" and "cocatalyst" are used interchangeably.
The polymerization is typically carried out in the presence of a Ziegler-Natta-type catalyst.
In the polymerization of propylene a typically used Ziegler-Natta type catalyst is a stereospecific, high yield Ziegler-Natta catalyst comprising as essential components Mg, Ti, Al and Cl. This type of catalysts comprise typically in addition to a solid transition metal (like Ti) component a cocatalyst(s) as well external donor(s) as stereoregulating agent. These compounds may be supported on a particulate support, such as inorganic oxide, like silica or alumina, or, usually, the magnesium halide may form the solid support. It is also possible that solid catalysts are self supported, i.e. the catalysts are not supported on an external support, but are prepared via emulsion-solidification method.
The solid transition metal component usually also comprises an electron donor (internal electron donor). Suitable internal electron donors are, among others, esters of carboxylic acids, like phthalates, citraconates, and succinates. Also oxygen- or nitrogen-containing silicon compounds may be used.
Examples of suitable catalysts and compounds in catalysts are shown in among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

The cocatalyst used in combination with the transition metal compound typically comprises an aluminium alkyl compound. The aluminium alkyl compound is preferably trialkyl aluminium such as trimethylaluminium, triethylaluminium, tri-isobutylaluminium or tri-n-octylaluminium. However, it may also be an alkylaluminium halide, such as diethylaluminium chloride, dimethylaluminium chloride and ethylaluminium sesquichloride.

Preferably the catalyst system also comprises an external electron donor. Suitable electron donors known in the art include ethers, ketones, amines, alcohols, phenols, phosphines and silanes. Examples of these compounds are given, among others, in WO 95/32994, US 4107414, US 4186107, US 4226963, US 4347160, US 4382019, US 4435550, US 4465782, US 4472524, US 4473660, US 4522930, US 4530912, US 4532313, US 4560671 and US 4657882.

Electron donors consisting of organosilane compounds, containing Si-OCOR, Si-OR, and/or Si-NR$_2$ bonds, having silicon as the central atom, and R is an alkyl, alkenyl, aryl, arylalkyl or cycloalkyl with 1-20 carbon atoms are known in the art. Such compounds are described in US 4472524, US 4522930, US 4560671, US 4581342, US 4657882, EP 45976, EP 45977 and EP1538167.

In the present invention a Ziegler Natta catalyst, e.g. an inorganic halide (e.g. MgCl$_2$) supported titanium catalyst or self supported solid Ziegler Natta catalysts, together with an aluminium alkyl (e.g. triethylaluminium) cocatalyst are employed. Silanes, e.g. dicyclopentanedimethoxysilane (DCPDMS) or cyclohexylmethyldimethoxysilane (CHMDMS), may be typically used as external donors. The catalyst in the second polymerization stage is typically the same that is used in the first polymerization stage.

In the polymerization of ethylene the catalyst may be any catalyst which is capable of producing the desired ethylene polymer. Suitable catalysts are, among others, Ziegler-Natta catalysts based on a transition metal, such as titanium, zirconium and/or vanadium or metallocene catalysts or late transition metal catalysts. Especially Ziegler- Natta catalysts and metallocene catalysts are useful as they can produce polymers within a wide range of molecular weight with a high productivity.

Suitable Ziegler - Natta catalysts preferably contain a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 5 to 100 $\mu$m. However, it has turned out that special advantages can be obtained if the support has an average particle size from 10 to 30 $\mu$m, preferably from 18 to 25 $\mu$m. Alternatively, the support may have an average particle size of from 30 to 80 $\mu$m, preferably from 30 to 50 $\mu$m. Examples of suitable support materials are, for instance, ES747JR produced and marketed by Ineos Silicas (former Crossfield), and SP9-491, produced and marketed by Grace.

The magnesium compound is preferably a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is preferably a chlorine containing aluminium alkyl. Especially preferred compounds are aluminium alkyl dichlorides and aluminium alkyl sesquichlorides.

The titanium compound is preferably a halogen containing titanium compound, preferably chlorine containing titanium compound. Especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable Ziegler- Natta catalysts for ethylene polymerization contain a titanium compound together with a magnesium halide compound acting as a support. Thus, the catalyst contains a titanium compound on a magnesium dihalide, like magnesium dichloride. Such catalysts are disclosed, for instance, in WO 2005/118655 and EP 810235.

The Ziegler- Natta catalyst is used together with an activator. Suitable activators are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Furthermore they include alkylaluminium oxy-compounds, such as methylaluminiumoxane (MAO), hexaisobutylaluminiumoxane (HIBAO) and tetraisobutylaluminiumoxane (TIBAO). Also other aluminium alkyl compounds, such as isoprenylaluminium, may be used. Especially preferred activators are trialkylaluminiums, of which triethylaluminium, trimethylaluminium and tri-isobutylaluminium are particularly used.

In addition to being activators the metal alkyl compounds usually also have a scavenging effect. They are capable of reacting with impurities present in the feedstock material and thereby prevent the impurities from inactivating the catalyst. Examples of such harmful impurities are oxygen, water, sulphur-containing compound, other oxygen-containing compounds and the like.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

Polymerization process

The polymerization may be conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

Often the polymerization takes place in an inert diluent, typically a hydrocarbon diluent such as methane, ethane, propane, n-butane, isobutane, pentanes, hexanes, heptanes, octanes etc., or their mixtures. This is especially the case when polymerizing or copolymerizing ethylene. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 1 to about 50 % by mole, preferably from about 2 to about 20 % by mole and in particular from about 2 to about 15 % by mole. The benefit of having a high ethylene concentration is that the productivity of the catalyst is increased but the drawback is that more ethylene then needs to be recycled than if the concentration was lower.

The slurry polymerization may also be conducted without an inert diluent so that the monomer forms the entire, or a substantial part of, the fluid phase. This is especially the case in the polymerization or copolymerization of propylene. Typically the fluid phase then contains from 60 to 99 %, preferably from 70 to 97 % of propylene. The rest is then typically inert components, such as propane.

The temperature in the slurry polymerization is typically from 50 to 115 °C, preferably from 60 to 110 °C and in particular from 70 to 100 °C. The pressure is from 1 to 150 bar, preferably from 10 to 100 bar. As the person skilled in the art knows, the polymerization temperature needs to be adjusted according to the characteristics of the polymer resin to be produced. Typically the copolymers are produced at lower temperature than homopolymers, especially where the content of the comonomer is high.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 85 to 110 °C, preferably from 90 to 105 °C and the pressure is from 40 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460.

Hydrogen may be fed into the reactor to control the molecular weight of the polymer as known in the art. Furthermore, one or more alpha-olefin comonomers may be added into the reactor to control the crystallinity of the polymer product. The actual amount of such hydrogen and comonomer feeds depends on the catalyst that is used and the desired melt index (or molecular weight) and comonomer content of the resulting polymer.

The polymerization may also be conducted in gas phase. It may then be conducted in a fluidized bed reactor, in a fast fluidized bed reactor or in a settled bed reactor or in any combination of these. When a combination of reactors is used then the polymer is transferred from one polymerization reactor to another. Furthermore, a part or whole of the polymer from a polymerization stage may be returned into a prior polymerization stage.

In a fluidized bed gas phase reactor an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871. One or more of the above-mentioned components may be continuously added into the fluidization gas to compensate for losses caused, among other, by reaction or product withdrawal.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Among others, WO-A-01/05845 and EP-A-499759 disclose such methods.

Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

The reactor may also include a mechanical agitator to further facilitate mixing within the fluidized bed. An example of suitable agitator design is given in EP-A-707513.

Typically the fluidized bed polymerization reactor is operated at a temperature within the range of from 50 to 100 °C, preferably from 65 to 90 °C. The pressure is suitably from 10 to 40 bar, preferably from 15 to 30 bar.

Antistatic agent(s) and other process additives may be introduced into any one of the reactors if needed. Suitable additives and methods to use them are disclosed, among others, in US-A-5026795, US-A-4803251, US-A-4532311, US-A-4855370 and EP-A-560035.

Control of activator and solid catalyst component feeds

In the following the invention is explained for the operation in a slurry reactor. However, the person skilled in the art is able to adapt the teaching to other polymerization types as well, such as gas phase polymerization and solution polymerization.

In the present invention the instantaneous feeds of the solid catalyst component and the activator are adjusted so that their ratio is maintained at a preset value. The instantaneous feeds, as understood herein, may be suitably filtered. The filters are commonly used in process control to eliminate the effect of the stochastic noise from the measurement signal. Suitable period, or inverse of a time constant, for a filter may be from 5 seconds to 60 seconds, preferably from 5 seconds to 30 seconds. Such a filtered signal is, however, clearly different from a value that has been averaged over the whole production campaign, having a duration of a couple of days, or an average residence time of the polymer within the reactor, which is typically several minutes, such as from 30 minutes to five hours.

The process for setting up the material balances is well known to the person skilled in the art. They are based on the principle:

{Change in inventory} = {total feed and formation in the reactor} − {total withdrawal and consumption in the reactor}

For the purpose of the present invention the consumption of the activator through different reactions is assumed to be negligible. The material balance for the activator is thus:

$$\varepsilon \cdot V \cdot \frac{d[A]}{dt} = F_A - \varepsilon \cdot Q_o \cdot [A]$$

Where [A] is the concentration of the activator in the fluid phase in the reactor, V is the volume of the slurry in the reactor, $\varepsilon$ is the volume fraction of the fluid in the slurry in the reactor, $F_A$ is the feed rate of the activator and $Q_o$ is the volumetric outflow rate of the slurry in from the reactor.

In the same way material balances are set for the monomer, diluent, optional comonomers and hydrogen.

The volume fraction of fluid can be calculated from process measurements as follows.

The composition of the fluid phase is usually analyzed by using on-line gas chromatography. When the composition, temperature and the pressure are known then the density of the fluid phase can easily be calculated. The calculation may be based on, for instance, well-known equations of state. It may also be based on empirical correlation which has been defined for the specific composition from the measured density data. The person skilled in the art usually knows which method is the most reliable and if there is any uncertainty he or she will confirm the predictions with the actually measured data.

The density of the slurry within the reactor is measured using suitable methods. These methods include radioactive measurement, ultrasound measurement and measurement based on coriolis-forces. These methods are widely known in the art and they can be easily applied. If needed, advice is given by the equipment suppliers.

Density of the polymer being produced is known from the material targets and it may also be determined in the quality control laboratory. When the densities of the fluid phase, slurry and polymer are known then the volume fraction of the fluid, $\varepsilon$, can easily be calculated:

$$\varepsilon = \frac{\rho_p - \rho_s}{\rho_p - \rho_f}$$

where $\rho$ denotes the density and the subscript $\rho$ denotes the polymer, s the slurry and f the fluid.

The mass flow rates can be determined using well known techniques of the art. For example, measurement based on coriolis-force has been found to give good results.

The volume of the slurry within the reactor may be determined by a suitable method known in the art. As examples ultrasonic measurement and radioactive measurement are mentioned.

Typically, the catalyst is fed into the polymerization process as a slurry as described in EP-A-1671697. The feed rate of the catalyst may be measured. However, when using certain dosing devices the feed rate may be determined directly from the operation of the dosing device. For instance, the method where the catalyst is mixed with oil having a viscosity between 20 and 1500 mPas at the conditions within the catalyst feed vessel and where the mixture is metered by using a valveless piston pump, as described in EP-A-1671697, gives a well-defined flow for a given stroke frequency and therefore the catalyst feed can be estimated from the stroke frequency and the concentration of the catalyst in the catalyst feed slurry.

According to the present invention the instantaneous flow of the activator is adjusted so that the molar ratio of the activator to the titanium in the solid catalyst component is maintained at a preset value.

According to the invention the feed rate of the activator is adjusted in response to a change in the set point of the feed of the solid catalyst component. This can conveniently be done as described below.

Typically there are individual control loops for the feed of the solid component and the activator. When the set point of the solid component feed rate is changed, either manually or by a higher-level controller, then also the set point of the activator feed rate is changed so that the ratio of the feed rates remains at a constant value. Such individual control loops may have feed-back where the actual feed rate is measured and corrective action is taken if the measured value deviates from the set point. Often such feed-back is realized as proportional control, PI control (proportional-integral) or PID (proportional-integral-derivative) control. The control actions may be carried out by individual controllers or by a computer connected to the process and where the control loops are defined.

However, as discussed above, if the dosing device, such as the measuring pump, gives a well-defined response to a change in the control signal then it is not necessary to have a feed-back in the control loop. Then the change in the set point simply causes a change into the operation of the dosing device. The resulting feed rate may then be measured or calculated from the characteristic of the dosing device.

In a feed-back control loop, the solid component feed rate may measured using a suitable flow meter, for instance similar to what is disclosed in WO-A- 2004057278. Other suitable flow meters are those based on coriolis-force. The flow meter then gives a signal which is compared with the set point for the flow. If there is a difference, then the controller then gives a signal to an actuator, requesting either to increase or decrease the flow, depending on whether the measured flow was smaller or greater than the set point. The actuator may be, for instance, a dosing valve, a measuring pump or a flow control valve. When the measured flow equals the set point then the controller maintains the function of the actuator constant. A method for controlling the solid component feed rate is disclosed, among others, in WO-A-2004026455. Typically there is a suitable filter applied on the measured solid component feed rate so that the control is not based on stochastic process noise only.

As the activator is typically completely dissolved in the diluent the flow rate of the activator may be measured using the devices known in the art for measuring liquid flows. For instance, coriolis-type flow meters may be used. The control of the activator flow can then be done as disclosed above for the feed of the solid component. Again, it is preferred to apply a filter to the measured value.

The set point for the flow rate of the activator is adjusted so that the ratio of the set point for the activator feed rate to the set point for the solid component feed rate is at a predetermined value. Because the feeds are either controlled or give a well-defined response to the function of the actuator the present method allows maintaining the ratio of the activator to the solid catalyst component constant throughout the production campaign.

Thus, according to one embodiment of the present invention the solid catalyst component is suspended in oil in an agitated feed vessel. The oil has a viscosity of from 20 to 1500 mPas in the conditions of the feed vessel. The agitated suspension is metered from the vessel into a reactor by using a valveless piston pump. When the set point of the solid component feed rate is changed the controller changes the stroke frequency of the pump. At the same time the set point of the activator feed rate is changed so that ratio of the set points remains constant. As the activator feed controller sees that there is a deviation between the set point and the measured activator feed rate it gives a signal to the actuator (for instance, a control valve) to change the flow rate so that the deviation becomes zero. Thereby the ratio of the actual activator feed rate to the actual solid component feed rate has not changed.

According to another embodiment of the present invention the feed rate of the solid catalyst component is measured. When the set point of the solid component feed rate is changed the controller observes a deviation between the set point and the measured flow rate and sends a signal to the actuator, which then acts to eliminate the deviation. Also here the set point of the activator feed rate is changed so that ratio of the set points remains constant. Again, the activator feed controller sees that there is a deviation between the set point and the measured activator feed rate and gives a signal to the actuator (for instance, a control valve) to change the flow rate so that the deviation becomes zero. Again, the ratio of the actual activator feed rate to the actual solid component feed rate has not changed.

The changes in the set point of the solid catalyst component feed rate can be made manually. However, it is also possible that the set point is defined by a higher-level controller aiming to keep, for instance, the polymer production rate within the polymerization reactor constant.

According to the present method the ratio of the solid catalyst component and the activator is suitably controlled as the ratio of the moles of aluminium in the activator feed to the moles of transition metal in the solid component feed. Suitably the molar ratio of the aluminium to the transition metal in the feed is maintained within $\pm 30$ %, preferably $\pm 20$ %, more preferably within $\pm 15$ %, even more preferably within $\pm 10$ %, especially preferably within $\pm 7$ % and in particular within $\pm 5$ % of the predefined target value. By "maintained within a given range" is here meant that the filtered values being averaged for a period of from 5 to 60 seconds, preferably from 5 to 30 seconds, remain within the given range practically during the whole production of a certain product. It is, however, understood by the person skilled in the art that for a short period the feed rates of the activator and the catalyst may substantially deviate from their set points, for instance when the set point has been changed or when there is a major disturbance in the process. However, in such situations the present invention aims to bring the feed rates quickly to the desired set point values.

It is well understood in the art that during continuous operation of a polymerization plant, different products may be produced. When the production targets are changed from one product to another then the process conditions are changed. The present invention includes also embodiments where different ratios of activator feed rate to the solid component feed rate are used in producing different products. Thereby the predefined set point of the ratio may be changed during the continuous operation but the feed rates of the activator and the solid component are adjusted so that their ratio always follows the given set point.

According to the present invention the concentration of the activator is estimated in the reactor. If the estimated concentration becomes lower than a preset lower limit for activator concentration, the set point for the feed rate of the activator is increased so that the activator concentration reaches said lower limit.

The concentration of the activator may be estimated by using known types of estimators, such as Kalman Filter, Extended Kalman Filter and like. These methods are well known in process control and descriptions may be found in different text books. Typically these methods solve a set of differential equations which are based on material balances of the components within the reaction mixture over the polymerization reactor.

As the person skilled in the art knows there is no generally applicable lower limit which would apply for all the known activators and all the known catalysts. Instead, the limit needs to be determined for each pair of an activator and a solid catalyst component individually. For instance, when using triethylaluminium in combination with Lynx 200 catalyst it has been found that if the concentration drops below the level of 0.02 mol/m$^3$ then the productivity of the catalyst starts to drop but still at 0.01 mol/m$^3$ the productivity is still on an acceptable level.

One aspect of this invention is to optimize the productivity of the catalyst by automatically adjusting the ratio of the activator to the solid catalyst component in order to reach maximum productivity. Then the individual controllers keep the flow rates of the solid catalyst component and the activator at their target values. A higher level controller adjusts the set point of the ratio of the activator to the solid catalyst component. After each adjustment the higher level controller lets the process stabilize for a sufficient period, typically for a period corresponding to at least three times the average residence time and observes the effect of the adjustment on the catalyst productivity. If the productivity increased, then the high-level controller makes a further change in the same direction and if it reduced, then the further change is made in the opposite direction. If there was no change, then the ratio is maintained at its present value.

## EXAMPLES

## COMPARATIVE EXAMPLE 1

A loop reactor having a volume of 500 dm$^3$ was operated at a temperature of 95 °C and a pressure of 57 bar. Into the reactor was further added 87 kg/h of propane and ethylene and hydrogen so that the ethylene content in the reaction mixture was 4.1 mol-% and the molar ratio of hydrogen to ethylene was 580 mol/kmol.

Furthermore, into the loop reactor were introduced a solid polymerization catalyst component sold by BASF under the trade name of Lynx 200 at a rate of 4.0 g/h using the method described in the paragraph [0063] of EP-A-1671697. Additionally, triethylaluminium (TEA) as an activator was introduced so that the molar ratio of aluminium in the cocatalyst feed to titanium in the solid catalyst component feed was 7. The solid component and the activator were introduced separately into the reactor. The flow rate of the solid catalyst component feed stream was not measured but estimated from the stroke frequency of the pump whereas the flow rate of the activator feed stream was measured. The activator feed rate was measured and controlled to maintain a constant flow rate. The set point of the activator flow rate was adjusted manually independent of the set point of the solid catalyst component feed rate. The instantaneous flow rate values were averaged for a period of about 20 seconds.

The production rate of ethylene homopolymer having a melt index MFR$_2$ of 430 g/10 min was 43 kg/h. The concentration of TEA in the supercritical fluid phase in the reactor was 0.08 mol/m$^3$.

During the operation all the other conditions were maintained as constant but the feed rate of the activator was reduced to about 1/7 of the original value, thus leading to the Al/Ti molar feed ratio of 1.1. Thereby 50 kg/h of ethylene homopolymer having MFR$_2$ of 330 g/10 min was produced. The concentration of TEA in the supercritical fluid phase in the reactor was 0.01 mol/m$^3$.

Thereafter the activator feed was increased to its original value. The production rate dropped to 37 kg/h and MFR$_2$ was 420 g/10 min. The concentration of TEA in the supercritical fluid phase in the reactor was 0.08 mol/m$^3$.

## EXAMPLE 1

The procedure of Comparative Example 1 was repeated except that the activator feed rate was controlled in such a way that the molar feed ratio of aluminium to titanium was 3.4 throughout the whole campaign. The control was conducted by defining a ratio control between the solid catalyst component feed rate and the activator feed rate: There the set point of the activator feed rate was changed when the set point of the solid catalyst component feed rate changed to maintain a constant ratio. The concentration of TEA in the supercritical fluid phase was 0.04 mol/m$^3$. The production rate was maintained at 48 kg/h by adjusting the catalyst feed rate near the value of 4.1 g/h, simultaneously adjusting the TEA feed rate to maintain the constant ratio. The operation during the run was stable and the controller maintained the feed rate of the activator such that the Al/Ti feed ratio remained within the range of from 3.0 to 3.8 mol/mol. Ethylene homopolymer having a melt index MFR$_2$ of 430 g/10 min was collected.

## EXAMPLE 2

The procedure of Example 1 was repeated except that the molar feed ratio of aluminium to titanium was maintained at 1.8 throughout the whole campaign. The concentration of TEA in the supercritical fluid phase was 0.02 mol/m$^3$. The production rate increased to 51 kg/h and was maintained there by adjusting the catalyst feed rate near the value of 3.8 g/h, simultaneously adjusting the TEA feed rate to maintain the constant ratio. The operation during the run was stable and the feed rate of the activator was maintained such that the Al/Ti feed ratio remained within the range of from 1.6 to 2.1 mol/mol. Ethylene homopolymer having a melt index MFR$_2$ of 390 g/10 min was collected.

## EXAMPLE 3

The procedure of Example 1 was repeated except that the molar feed ratio of aluminium to titanium was maintained at 1.1 throughout the whole campaign. The concentration of TEA in the supercritical fluid phase was 0.02 mol/m$^3$. The production rate was decreased to 35 kg/h and was maintained there by adjusting the catalyst feed rate near the value of 3.0 g/h, simultaneously adjusting the TEA feed rate to maintain the constant ratio. The operation during the run was stable and the feed rate of the activator was maintained such that the Al/Ti feed ratio remained within the range of from 0.9 to 1.3 mol/mol. Ethylene homopolymer having a melt index MFR$_2$ of 450 g/10 min was collected.

## COMPARATIVE EXAMPLE 2

A stirred tank reactor having a volume of 45 dm$^3$ was operated as liquid-filled at a temperature of 20 °C and a pressure of 55 bar. Into the reactor was fed propylene so much that the average residence time in the reactor was 0.3 hours together with 30 g/h hydrogen and 1.5 g/h of a solid catalyst component prepared otherwise according to Example 8 of WO 2004/029112, except that diethylaluminium chloride was used as an aluminium compound instead of triethylaluminium, with triethyl aluminium (TEA) as a cocatalyst and dicyclopentyldimethoxysilane (DCPDMS) as external donor so that the molar ratio of TEA/Ti was about 60 and TEA/DCPDMS was 10. The flow rates of the solid catalyst component and the activator were controlled in the same manner as described in Comparative Example 1.

The slurry from this prepolymerization reactor was directed to a loop reactor having a volume of 150 dm$^3$ together with 150 kg/h of propylene. No fresh hydrogen was added but all the hydrogen came via the prepolymerization reactor. The loop reactor was operated at a temperature of 80 °C and a pressure of 54 bar. The production rate of propylene homopolymer was 25 kg/h.

During the polymerization the activator feed rate was increased but the solid catalyst component feed rate was not changed so that the molar ratio Al/Ti was increased to 80. This caused the production rate to increase to 33 kg/h. When the activator feed rate dropped again to a value corresponding to a ratio of Al/Ti 60 the production rate dropped to 23 kg/h.

## EXAMPLE 4

The procedure of Comparative Example 2 was repeated except that the molar feed ratio of aluminium to titanium was maintained at 60 throughout the whole campaign. The control was conducted by defining a ratio control between the solid catalyst component feed rate and the activator feed rate: There the set point of the activator feed rate was changed when the set point of the solid catalyst component feed rate changed to maintain a constant ratio. The production rate was increased to 30 kg/h and was maintained there by adjusting the catalyst feed rate near the value of 1.8 g/h, simultaneously adjusting the TEA feed rate to maintain the constant ratio. The operation during the run was stable. The feed rate of the activator was maintained such that the Al/Ti feed ratio remained within the range of from 54 to 65 mol/mol.

**Claims**

1.  A process for continuously polymerizing at least one olefin in a polymerization reactor in the presence of a catalyst comprising a solid catalyst component further comprising a transition metal, and an activator, said process comprising the steps of:

    (i) continuously feeding said solid catalyst component into the polymerization reactor to establish a solid catalyst component feed;
    (ii) continuously feeding said activator into the polymerization reactor to establish an activator feed;
    (iii) establishing a signal proportional to the flow rate of said solid catalyst component into the polymerization reactor and determining the flow rate of said solid catalyst component from said signal;
    (iv) establishing a signal proportional to the flow rate of said activator into the polymerization reactor and determining the flow rate of said activator from said signal;
    (v) defining a predetermined value for a ratio of the activator feed rate to the solid catalyst component feed rate;
    (vi) calculating the concentration of the activator within fluid phase in said reactor;
    (vii) defining a minimum value for said concentration of said activator;
    (viii) increasing said predetermined value for the ratio of the activator feed rate to the solid catalyst component feed rate if the concentration of the activator is lower than said minimum value for said concentration.

    **characterized in that** the feed rate of said activator is adjusted in response to changes in said solid catalyst component feed rate so that the ratio of said activator feed rate to said solid catalyst component feed rate is at said predetermined value for said ratio.

2.  The process according to claim 1 comprising the additional steps of:

    (ix) defining a maximum value for said concentration of said activator;
    (x) decreasing said predetermined value for the ratio of the activator feed rate to the solid catalyst component feed rate if the concentration of the activator is higher than said maximum value for said concentration.

3.  The process according to any one of the preceding claims wherein said solid catalyst component feed and said activator feed are directed to the polymerization reactor as separate streams.

4.  The process according to any one of claims 1 to 2 wherein said solid catalyst feed and said activator feed are combined to one feed stream before entering the polymerization reactor.

5.  The process according to any one of the preceding claims wherein said activator comprises an alkyl aluminium compound.

6.  The process according to claim 5 wherein said alkyl aluminium compound is selected from the group consisting of trialkylaluminiums, dialkylaluminium chlorides and alkylaluminium sesquichlorides.

7.  The process according to claim 5 or claim 6 wherein said activator comprises an electron donor.

8.  The process according to claim 7 wherein the electron donor is selected from the group consisting of straight-chain and cyclic ethers, silicon ethers and esters.

9.  The process according to any one of claims 1 to 8 wherein the feed rate of the activator is adjusted so that the ratio of the activator feed rate to the solid component feed rate is maintained within $\pm 30$ %, preferably within $\pm 20$ %, more preferably within $\pm 10$ % and in particular within $\pm 5$ % of said predetermined value of said ratio of the activator feed rate to the solid catalyst component feed rate.

10. A method of controlling a continuous polymerization process where at least one olefin is polymerized in a polymerization reactor in the presence of a catalyst comprising a solid catalyst component further comprising a transition metal, and an activator, said method comprising the steps of:

    (i) providing a set point for the feed rate of said solid catalyst component into the polymerization reactor;
    (ii) providing a set point for a ratio of the activator feed rate to the solid catalyst component feed rate;
    (iii) controlling the feed rate of said solid catalyst component into the polymerization reactor to follow said set point for the feed rate of said solid catalyst component;

(iv) calculating a set point for the feed rate of said activator from said set point for the feed rate of said solid catalyst component and said set point for the ratio of the activator feed rate to the solid catalyst component feed rate;

(v) controlling the feed rate of said activator into the polymerization reactor to follow said set point for the feed rate of said activator;

(vi) calculating the concentration of the activator within fluid phase in said reactor;

(vii) defining a minimum value for said concentration of said activator;

(viii) increasing said set point for the ratio of the activator feed rate to the solid catalyst component feed rate if the concentration of the activator is lower than said minimum value for said concentration.

**11.** The method according to claim 10 wherein the steps (iii) to (v) are conducted by using an automatic controller which gives a signal to an actuator influencing said flow rates of said solid catalyst component and said activator.

**12.** The process according to claim 10 or claim 11 comprising the additional steps of:

(ix) defining a maximum value for said concentration of said activator;

(x) decreasing said set point for the ratio of the activator feed rate to the solid catalyst component feed rate if the concentration of the activator is higher than said maximum value for said concentration.

**13.** The method according to any one of the claims 10 to 12 wherein said set point for the solid catalyst component feed rate is provided by a higher-level controller controlling at least one variable within the polymerization reactor, said at least one variable being selected from the monomer concentration, comonomer concentration, hydrogen concentration, polymer production rate, polymer concentration and catalyst concentration.

**Patentansprüche**

**1.** Verfahren zum kontinuierlichen Polymerisieren von mindestens einem Olefin in einem Polymerisationsreaktor in Gegenwart eines Katalysators, der einen festen Katalysatorbestandteil, der ferner ein Übergangmetall umfasst, und einen Aktivator umfasst, wobei das Verfahren die folgenden Schritte umfasst:

(i) kontinuierliches Zuführen des festen Katalysatorbestandteils in den Polymerisationsreaktor, um eine Zufuhr an festem Katalysatorbestandteil einzurichten;

(ii) kontinuierliches Zuführen des Aktivators in den Polymerisationsreaktor, um eine Aktivatorzufuhr einzurichten;

(iii) Einrichten eines Signals, das proportional zur Strömungsgeschwindigkeit des festen Katalysatorbestandteils in den Polymerisationsreaktor ist, und Bestimmen von der Strömungsgeschwindigkeit des festen Katalysatorbestandteils aus dem Signal;

(iv) Einrichten eines Signals, das proportional zur Strömungsgeschwindigkeit des Aktivators in den Polymerisationsreaktor ist, und Bestimmen von der Strömungsgeschwindigkeit des Aktivators aus dem Signal;

(v) Definieren eines vorbestimmten Werts für ein Verhältnis von der Zufuhrgeschwindigkeit des Aktivators zu der Zufuhrgeschwindigkeit des festen Katalysatorbestandteils;

(vi) Berechnen der Konzentration von dem Aktivator innerhalb der Fluidphase in dem Reaktor;

(vii) Definieren eines Minimalwerts für die Konzentration des Aktivators;

(viii) Erhöhen des vorbestimmten Werts für das Verhältnis von der Zufuhrgeschwindigkeit des Aktivators zu der Zufuhrgeschwindigkeit des festen Katalysatorbestandteils, wenn die Konzentration des Aktivators geringer ist als der Minimalwert für die Konzentration,

**dadurch gekennzeichnet, dass** die Zufuhrgeschwindigkeit des Aktivators in Reaktion auf Veränderungen in der Zufuhrgeschwindigkeit des festen Katalysatorbestandteils so eingestellt wird, dass das Verhältnis von der Zufuhrgeschwindigkeit des Aktivators zu der Zufuhrgeschwindigkeit des festen Katalysatorbestandteils bei dem vorbestimmten Wert für das Verhältnis liegt.

**2.** Verfahren nach Anspruch 1, umfassend die folgenden zusätzlichen Schritte:

(ix) Definieren eines Maximalwerts für die Konzentration des Aktivators;

(x) Verringern des vorbestimmten Werts für das Verhältnis von der Zufuhrgeschwindigkeit des Aktivators zu der Zufuhrgeschwindigkeit des festen Katalysatorbestandteils, wenn die Konzentration des Aktivators höher ist als der Maximalwert für die Konzentration.

3. Verfahren nach einem der vorhergehenden Ansprüche, wobei die Zufuhr an festem Katalysatorbestandteil und die Aktivatorzufuhr zu dem Polymerisationsreaktor als getrennte Ströme geführt werden.

4. Verfahren nach einem der Ansprüche 1 und 2, wobei die Zufuhr an festem Katalysator und die Aktivatorzufuhr zu einem Zufuhrstrom kombiniert werden, bevor sie in den Polymerisationsreaktor eintreten.

5. Verfahren nach einem der vorhergehenden Ansprüche, wobei der Aktivator eine Alkylaluminiumverbindung umfasst.

6. Verfahren nach Anspruch 5, wobei die Alkylaluminiumverbindung aus der Gruppe ausgewählt ist, die aus Trialkylaluminiumverbindungen, Dialkylaluminiumchloriden und Alkylaluminiumsesquichloriden besteht.

7. Verfahren nach Anspruch 5 oder 6, wobei das Aktivator einen Elektronendonor umfasst.

8. Verfahren nach Anspruch 7, wobei der Elektronendonor aus der Gruppe ausgewählt ist, die aus geradkettigen und cyclischen Ethern, Siliciumethern und Estern besteht.

9. Verfahren nach einem der vorhergehenden Ansprüche 1 bis 8, wobei die Zufuhrgeschwindigkeit des Aktivators so eingestellt wird, dass das Verhältnis von der Zufuhrgeschwindigkeit des Aktivators zu der Zufuhrgeschwindigkeit des festen Bestandteils innerhalb von $\pm 30$ %, vorzugsweise innerhalb von $\pm 20$ %, besonders vorzugsweise von innerhalb $\pm 10$ % und inbesondere innerhalb $\pm 5$ % des vorbestimmten Werts für das Verhältnis von der Zufuhrgeschwindigkeit des Aktivators zu der Zufuhrgeschwindigkeit des festen Katalysatorbestandteils gehalten wird.

10. Methode zum Steuern eines kontinuierlichen Polymerisationsverfahrens, wobei mindestens ein Olefin in einem Polymerisationsreaktor in Gegenwart eines Katalysators polymerisiert wird, der einen festen Katalysatorbestandteil, der ferner ein Übergangmetall umfasst, und einen Aktivator umfasst, wobei die Methode die folgenden Schritte umfasst:

(i) Bereitstellen eines Sollwerts für die Zufuhrgeschwindigkeit des festen Katalysatorbestandteils in den Polymerisationsreaktor;
(ii) Bereitstellen eines Sollwerts für ein Verhältnis von der Zufuhrgeschwindigkeit des Aktivators zu der Zufuhrgeschwindigkeit des festen Katalysatorbestandteils;
(iii) Steuern der Zufuhrgeschwindigkeit des festen Katalysatorbestandteils in den Polymerisationsreaktor, um dem Sollwert für die Zufuhrgeschwindigkeit des festen Katalysatorbestandteils zu folgen;
(iv) Berechnen eines Sollwerts für die Zufuhrgeschwindigkeit des Aktivators aus dem Sollwert für die Zufuhrgeschwindigkeit des festen Katalysatorbestandteils und dem Sollwert für das Verhältnis von der Zufuhrgeschwindigkeit des Aktivators zu der Zufuhrgeschwindigkeit des festen Katalysatorbestandteils;
(v) Steuern der Zufuhrgeschwindigkeit des Aktivators in den Polymerisationsreaktor, um dem Sollwert für die Zufuhrgeschwindigkeit des Aktivators zu folgen;
(vi) Berechnen der Konzentration des Aktivators innerhalb der Fluidphase in dem Reaktor;
(vii) Definieren eines Minimalwerts für die Konzentration des Aktivators;
(viii) Erhöhen des Sollwerts für das Verhältnis von der Zufuhrgeschwindigkeit des Aktivators zu der Zufuhrgeschwindigkeit des festen Katalysatorbestandteils, wenn die Konzentration des Aktivators geringer ist als der Minimalwert für die Konzentration.

11. Methode nach Anspruch 10, wobei die Schritte (iii) bis (v) unter Verwendung einer automatischen Steuerung durchgeführt werden, die einem Stellelement ein Signal gibt, das die Strömungsgeschwindigkeiten von dem festen Katalysatorbestandteil und dem Aktivator beeinflusst.

12. Methode nach Anspruch 10 oder 11, umfassend die zusätzlichen Schritte:

(ix) Definieren eines Maximalwerts für die Konzentration des Aktivators;
(x) Verringern des vorbestimmten Werts für das Verhältnis von der Zufuhrgeschwindigkeit des Aktivators zu der Zufuhrgeschwindigkeit des festen Katalysatorbestandteils, wenn die Konzentration des Aktivators höher ist als der Maximalwert für die Konzentration.

13. Methode nach einem der Ansprüche 10 bis 12, wobei der Sollwert für die Zufuhrgeschwindigkeit des festen Katalysatorbestandteils durch eine übergeordnete Steuerung bereitgestellt wird, die mindestens eine Variable innerhalb des Polymerisationsreaktors steuert, wobei die mindestens eine Variable aus der Monomerkonzentration, Comonomerkonzentration, Wasserstoffkonzentration, Polymerherstellungsgeschwindigkeit, Polymerkonzentration und Katalysatorkonzentration ausgewählt ist.

**Revendications**

1. Procédé de polymérisation continue d'au moins un oléfine dans un réacteur de polymérisation en présence d'un catalyseur qui comprend un composant de catalyseur solide qui comprend en outre un métal de transition, et un activateur, ledit procédé comprenant les étapes qui consistent à :

   (i) fournir en continu ledit composant de catalyseur solide au réacteur de polymérisation afin d'établir une alimentation en composant de catalyseur solide ;
   (ii) fournir en continu ledit activateur au réacteur de polymérisation afin d'établir une alimentation en activateur ;
   (iii) établir un signal proportionnel au débit dudit composant de catalyseur solide dans le réacteur de polymérisation, et déterminer le débit dudit composant de catalyseur solide à partir dudit signal ;
   (iv) établir un signal proportionnel au débit dudit activateur dans le réacteur de polymérisation, et déterminer le débit dudit activateur à partir dudit signal ;
   (v) définir une valeur prédéterminée de rapport entre le débit d'alimentation en activateur et le débit d'alimentation en composant de catalyseur solide ;
   (vi) calculer la concentration en activateur dans la phase liquide dudit réacteur ;
   (vii) définir une valeur minimum pour ladite concentration en activateur ;
   (viii) augmenter ladite valeur prédéterminée de rapport entre le débit d'alimentation en activateur et le débit d'alimentation en composant de catalyseur solide si la concentration en activateur est inférieure à ladite valeur minimum pour ladite concentration,

   **caractérisé en ce que** le débit d'alimentation dudit activateur est ajusté en réaction aux changements de débit d'alimentation dudit composant de catalyseur solide de sorte que le rapport entre ledit débit d'alimentation en activateur et ledit débit d'alimentation en composant de catalyseur solide se trouve à ladite valeur prédéterminée pour ledit rapport.

2. Procédé selon la revendication 1, qui comprend les étapes supplémentaires qui consistent à :

   (ix) définir une valeur maximale pour ladite concentration en activateur ;
   (x) réduire ladite valeur prédéterminée pour le rapport entre le débit d'alimentation en activateur et le débit d'alimentation en composant de catalyseur solide si la concentration en activateur est supérieure à ladite valeur maximale pour ladite concentration.

3. Procédé selon l'une quelconque des revendications précédentes, dans lequel ladite alimentation en composant de catalyseur solide et ladite alimentation en activateur sont orientées vers le réacteur de polymérisation sous forme de flux distincts.

4. Procédé selon l'une quelconque des revendications 1 à 2, dans lequel ladite alimentation en catalyseur solide et ladite alimentation en activateur sont combinées en un seul flux avant de pénétrer dans le réacteur de polymérisation.

5. Procédé selon l'une quelconque des revendications précédentes, dans lequel ledit activateur comprend un composé d'aluminium alkyle.

6. Procédé selon la revendication 5, dans lequel ledit composé d'aluminium alkyle est choisi parmi le groupe qui consiste en des trialkylaluminums, des chlorures de dialkylaluminium, et des sesquichlorures d'alkylaluminium.

7. Procédé selon la revendication 5 ou 6, dans lequel ledit activateur comprend un donneur d'électrons.

8. Procédé selon la revendication 7, dans lequel le donneur d'électrons est choisi parmi le groupe qui consiste en des éthers à chaîne directe et des éthers cycliques, des éthers de silicone, et des esters.

9. Procédé selon l'une quelconque des revendications 1 à 8, dans lequel le débit d'alimentation en activateur est ajusté de sorte que le rapport entre le débit d'alimentation en activateur et le débit d'alimentation en composant solide soit maintenu à ±30%, de préférence à ±20%, de préférence à ±10%, et en particulier à ±5% de ladite valeur prédéterminée pour ledit rapport entre le débit d'alimentation en activateur et le débit d'alimentation en composant de catalyseur solide.

10. Procédé de contrôle d'un processus de polymérisation continue, dans lequel au moins un oléfine est polymérisé dans un réacteur de polymérisation en présence d'un catalyseur qui comprend un composant de catalyseur solide qui comprend en outre un métal de transition, et un activateur, ledit procédé comprenant les étapes qui consistent à :

(i) prévoir un point de consigne pour le débit d'alimentation dudit composant de catalyseur solide dans le réacteur de polymérisation ;
(ii) prévoir un point de consigne pour un rapport entre le débit d'alimentation en activateur et le débit d'alimentation en composant de catalyseur solide ;
(iii) contrôler le débit dudit composant de catalyseur solide dans le réacteur de polymérisation, afin de respecter ledit point de consigne pour le débit d'alimentation dudit composant de catalyseur solide ;
(iv) calculer un point de consigne pour le débit d'alimentation en activateur à partir dudit point de consigne pour le débit d'alimentation dudit composant de catalyseur solide et dudit point de consigne pour le rapport entre le débit d'alimentation en activateur et le débit d'alimentation en composant de catalyseur solide ;
(v) contrôler le débit dudit activateur dans le réacteur de polymérisation, afin de respecter ledit point de consigne pour le débit d'alimentation dudit activateur ;
(vi) calculer la concentration en activateur dans la phase liquide dans ledit réacteur ;
(vii) définir une valeur minimale pour ladite concentration dudit activateur ;
(viii) augmenter ledit point de consigne pour le rapport entre le débit d'alimentation en activateur et le débit d'alimentation en composant de catalyseur solide si la concentration en activateur est inférieure à ladite valeur minimale pour ladite concentration.

11. Procédé selon la revendication 10, dans lequel les étapes (iii) à (v) sont réalisées en utilisant un contrôleur automatique qui fournit un signal à un actionneur qui influence lesdits débits dudit composant de catalyseur solide et dudit activateur.

12. Procédé selon la revendication 10 ou 11, qui comprend les étapes supplémentaires qui consistent à :

(ix) définir une valeur maximale pour ladite concentration en activateur ;
(x) diminuer ledit point de consigne pour le rapport entre le débit d'alimentation en activateur et le débit d'alimentation en composant de catalyseur solide si la concentration en activateur est supérieure à ladite valeur maximale pour ladite concentration.

13. Procédé selon l'une quelconque des revendications 10 à 12, dans lequel ledit point de consigne pour le débit d'alimentation en composant de catalyseur solide est fourni par un contrôleur de niveau plus élevé qui contrôle au moins une variable dans le réacteur de polymérisation, ladite au moins une variable étant choisie parmi la concentration en monomère, la concentration en comonomère, la concentration en hydrogène, le taux de production de polymère, la concentration en polymère, et la concentration en catalyseur.

## REFERENCES CITED IN THE DESCRIPTION

### Patent documents cited in the description

- EP 315192 A
- EP 313087 A
- WO 2007136493 A
- US 4560671 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 03000755 A
- WO 2004029112 A
- WO 9219659 A
- WO 9219653 A
- WO 9219658 A
- US 4382019 A
- US 4435550 A
- US 4465782 A
- US 4473660 A
- US 5539067 A
- US 5618771 A
- EP 45975 A
- EP 45976 A
- EP 45977 A
- WO 9532994 A
- US 4107414 A
- US 4186107 A
- US 4226963 A
- US 4347160 A
- US 4472524 A
- US 4522930 A
- US 4530912 A
- US 4532313 A
- US 4657882 A
- US 4581342 A
- EP 1538167 A
- EP 688794 A
- WO 9951646 A
- WO 0155230 A
- WO 2005118655 A
- EP 810235 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087361 A
- US 4578879 A
- EP 600414 A
- EP 721798 A
- US 4543399 A
- EP 699213 A
- WO 9425495 A
- EP 696293 A
- WO 0105845 A
- EP 499759 A
- WO 0026258 A
- EP 887379 A
- EP 887380 A
- EP 887381 A
- EP 991684 A
- WO 0029452 A
- US 4621952 A
- EP 188125 A
- EP 250169 A
- EP 579426 A
- EP 707513 A
- US 5026795 A
- US 4803251 A
- US 4532311 A
- US 4855370 A
- EP 560035 A
- EP 1671697 A
- WO 2004057278 A
- WO 2004026455 A

**Non-patent literature cited in the description**

- **GELDART ; BAYENS.** The Design of Distributors for Gas-fluidized Beds. *Powder Technology,* 1985, vol. 42

- **GELDART.** Gas Fluidization Technology. J.Wiley & Sons, 1986